# EUROPÄISCHE PATENTSCHRIFT

(11) **EP 1 294 247 B1**
(45) Veröffentlichungstag und Bekanntmachung des Hinweises auf die Patenterteilung: **22.06.2005**
(21) Anmeldenummer: 01953797.6
(22) Anmeldetag: 22.06.2001
(51) Int. Cl.: A43B 5/02, A43B 5/00, A43B 13/38, A43B 17/00

(54) **ALS ZWISCHENSOHLE, INNENSOHLE ODER EINLEGESOHLE AUSGEBILDETE SOHLE FÜR EINEN SCHUH UND SCHUH MIT EINER DERARTIGEN SOHLE**
SOLE IN THE FORM OF A MIDSOLE, INNER SOLE OR INSERTABLE SOLE FOR A SHOE AND A SHOE WITH SAID SOLE
SEMELLE DE TYPE SEMELLE INTERMEDIAIRE, SEMELLE INTERNE OU SEMELLE INSERABLE POUR UNE CHAUSSURE ET CHAUSSURE DOTEE DE LADITE SEMELLE

(30) Priorität: 26.06.2000 DE 20010794 U
(43) Veröffentlichungstag der Anmeldung: 26.03.2003
(73) Patentinhaber: PUMA Aktiengesellschaft Rudolf Dassler Sport, 91074 Herzogenaurach (DE)
(72) Erfinder: SUSSMANN, Reinhold, 91443 Scheinfeld (DE); WIDMANN, Horst, 90571 Schwaig (DE)
(74) Vertreter: Gosdin, Michael
(86) Internationale Anmeldenummer: PCT/DE2001/002272
(87) Internationale Veröffentlichungsnummer: WO 2002/000051

(56) Entgegenhaltungen:
- DE-A- 19 708 113
- DE-C- 19 601 219

## Beschreibung

Die vorliegende Erfindung bezieht sich auf eine als Zwischensohle, Innensohle oder Einlegesohle ausgebildete Sohle für einen Schuh mit durchbiegbarer Laufsohle und auf einen Schuh mit einer derartigen Sohle.

Bei Schuhen mit einer durchbiegbaren Laufsohle ist es bekannt, dass sich die Laufsohle bei bestimmten Belastungszuständen in Form eines Brückenbogens oder Torbogens durchbiegt. Dies geschieht beispielsweise beim Fußballspielen bei einem Spannschuß. Hierbei wird der Ball derart getroffen, daß bei Schuhen mit weicher, flexibler Laufsohle der Vorderfuß mitsamt dem Vorderschuh infolge der Nachgiebigkeit der Laufsohle nach unten abgebogen wird. Dabei wird also die Sohle vorn nach unten gebogen, so daß die beim Schuß übertragbare Kraft nicht vollkommen auf den Ball übertragen werden kann.

Aus der deutschen Patentschrift 196 01 219 C1 ist ein Schuh bekannt, der gegen das vorstehend genannte Durchbiegen versteift ist. Die Versteifung wird dadurch erreicht, daß ein vorderes, das vordere Sohlenende mit dem Schaft verbindendes Zugband und zwei hintere seitliche, den Fersenbereich der Sohle mit dem Schaft verbindende Zugbänder vorgesehen sind. Das vordere Zugband und die beiden hinteren Zugbänder sind im Ristbereich miteinander verbunden. Zusätzlich kann der Verbindungsknoten der drei Bänder durch ein quer von einer zur anderen Schuhseite verlaufendes weiteres Zugband fixiert sein. Hierdurch wird ein Abbiegen des Schuhvorderteils nach unten vermieden, das Abrollen der Sohle jedoch nicht behindert. Die bei Belastung in Abbiegerichtung auftretende Kraft wird dabei vom Rist aufgenommen.

Dies ist für den Ristbereich eine ungünstige und auf Dauer schmerzhafte Belastung, da in diesem Bereich mehrere Sehnen verlaufen. Außerdem wird durch diese Konstruktion nicht verhindert, daß sich eine weiche, flexible Schuhsohle, beispielsweise beim Auftreffen auf harten und/oder gefrorenen Gegenständen im Bereich der Fußwölbung nach oben durchbiegt und den Fuß dabei äußerst schmerzhaft belastet.

Aus der DE 197 08 113 A1 ist eine Sohle für einen Sportschuh bekannt, die als Schale ausgebildet ist. In die Schale sind verstärkende Zugbänder integriert. Insgesamt ergibt sich ein stabiles Element, das jedoch relativ schwer ist.

Mit der Erfindung soll die Aufgabe gelöst werden, die unerwünschte Abbiegung bzw. Durchbiegung, aber auch die Belastung des Fußes im Ristbereich und im Bereich der Fußwölbung zu vermeiden.

Gelöst wird diese Aufgabe durch die Merkmale des Anspruchs 1.

Durch das verwendete federelastische Material, die hochgezogenen Seitenbereiche und das bzw. die an diesen in deren oberem Randbereich angebrachte(n) Zugelement(e) werden alle oben genannten Belastungsarten von der erfindungsgemäßen, als Zwischensohle, Innensohle oder Einlegesohle ausgebildeten Sohle aufgenommen und die genannten schmerzhaften Belastungen nicht mehr auf den Fuß übertragen.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: eine perspektivische Ansicht der erfindungsgemäßen Sohle,
- Fig. 2: eine Draufsicht auf die Sohle der Fig. 1,
- Fig. 3: einen Querschnitt durch einen Abschnitt eines Schuhes mit einer Sohle gemäß den Fig. 1 und 2,
- Fig. 4: eine Seitenansicht einer Sohle mit einem Dämpfungselement im Fersenbereich und einer spezieller Führung der Zugelemente und
- Fig. 5: die Ansicht gemäß Fig. 4 mit einer im Schnitt dargestellten Laufsohle.

Mit 1 ist eine als Zwischensohle, Innensohle oder Einlegesohle ausgebildete Sohle bezeichnet. Sie besteht aus einem federelastischen, flexiblen Material, beispielsweise einem entsprechenden Thermoplast oder Duroplast, wie Polyamid, Polyurethan, Polyethylen oder dgl.

Insbesondere besteht die Sohle 1 aus einem langfaserigen Material mit hoher Zugfestigkeit, wie Glasfasern, Kohlefasern, Aramidfasern, oder Kunststofffasern aus oder auf der Basis von Polyamid, Aramid oder dgl., oder aus Textilfasern, die beispielsweise mit einem thermoplastischen oder duroplastischen Bindemittel versetzt und/oder versehen sind und durch einen Thermoprozeß, insbesondere einem Thermo-Preßprozeß, hergestellt und gegebenenfalls, insbesondere zugleich mit der Sohle 1, geformt sind.

Die Herstellung erfolgt beispielsweise nach dem aus der DE 197 16 666 A1 bekannten Verfahren und den dort genannten Werkstoffen, auf die hiermit ausdrücklich Bezug genommen wird. So erfolgt beispielsweise die Herstellung des zu verpressenden Musters auf einem Stickautomaten, wobei ein auf einer Spule aufgewickelter, endloser und mit thermoplastisch verformbarem Kunststoffpulver durchsetzter Strang aus beispielsweise Kohlefasern und/oder Glasfasern und/oder Aramidfasern auf einem Trägermaterial abgelegt und mit Zickzack-Stichen grob befestigt wird, so daß der Strang in der gewünschten, vorher berechneten Position auf dem Träger haftet. Das Trägermaterial kann ein textiles Material oder ein Kunststoffmaterial sein, das beispielsweise in Form eines Gewebes, Gewirkes oder eines Kunststofffilms oder einer Fasermatte vorliegt. Die Menge der Fäden oder Fasern und/oder das Muster, d.h. die geometrische Konfiguration und die Abstände ein oder mehrerer Stränge voneinander, richtet sich nach den vorher definierten und berechneten Eigenschaften der fertigen Sohle. Nach Fertigstellung der "Stickarbeiten" werden die so gewonnenen praktisch zweidimensionalen, das heißt ebenen, Matten mittels Hitze von beispielsweise 230°C bis 260°C und mittels eines definierten Formwerkzeugs in ein dreidimensionales Gebilde umgeformt. Dabei schmilzt das in den Strängen enthaltene Kunststoffpulver (Mikrogranulat) und erstarrt beim Abkühlen in der gewünschten Formgestalt. Durch Aufschmelzen des Kunststoffs verbindet sich dieser mit den Fasern des Stranges und erreicht dann beim Abkühlen die versteifende Wirkung, ähnlich einem Kunstharz in Composite-Materialien. Das Trägermaterial schmilzt bei diesem Prozeß vorzugsweise ebenfalls auf und gegebenenfalls überstehende Reste werden bei der Nacharbeitung der Sohle entfernt.

Die Herstellung der Sohle 1 kann jedoch auch in anderen Verfahrenstechniken, beispielsweise durch einen Spritz- oder Spritzgießprozeß, einen Prägeprozeß oder dgl. erfolgen. Das Material für die Sohle 1 kann bevorzugt transparent oder durchscheinend sein. Wenigstens eine ihrer Oberflächen kann glatt, poliert oder aufgerauht sein.

Die Sohle 1 ist im Fersenbereich 2 der Ferse bzw. Fersenschale 3 über den Bereich 4 der Fußwölbung, insbesondere einen Stegbereich, bis zum Ballenbereich 5 des Fußballens, also etwa dem Anfang des Vordersohlenbereiches 6 der Vordersohle 7, federnd elastisch, jedoch praktisch starr ausgebildet, so dass sie bei normaler Belastung nicht oder kaum biegbar ist. Diese Starrheit wird durch die Materialstärke und die Wahl des Materials für die Fasern und das Bindemittel bestimmt. Der Ballenbereich 5 sowie die Vordersohle 7 hingegen sind durch geeignete Wahl der Materialstärke und gegebenenfalls durch vorgesehene Durchbrechungen 8 federnd elastisch biegbar eingestellt.

Sowohl der Fersenbereich 2 bzw. die Fersenschale 3 als auch die Vordersohle 7 sind auf beiden Seiten 9, 10 etwa 0, 5 cm bis 2 cm mit senkrecht oder schräg nach außen hochgezogenen Rändern in Form von Wänden versehen. Bevorzugt ist die Sohle 1 dabei an die Kontur eines Fußes angepaßt. Der Boden 7' der Vordersohle 7 kann dabei etwas nach außen bombiert, also leicht nach unten gewölbt sein. Die Schräge der Wände kann etwa 45° bis etwa 80° betragen, gemessen als Außenwinkel α zur Ebene 7.1 der Vordersohle 7. Diese hochstehenden Wände 3.9 und 7.9 der Ferse bzw. Fersenschale 3 bzw. der Vordersohle 7 der einen Seite 9 und die entsprechenden Wände 3.10 und 7.10 der anderen Seite 10 derselben sind jeweils durch ein im oberen Randbereich 3.9.1 und 3.10.1 der Fersenschale 3 bzw. 7.9.1 und 7.10.1 der Vordersohle 7 durch je ein Zugelement 11 bzw. 12 hoher Zugfestigkeit und sehr geringer elastischer Dehnung miteinander verbunden. Hierdurch kann durch eine Belastung, wie sie beispielsweise bei einem Spannschuß beim Fußballspielen auftritt oder wie sie auftreten kann, wenn der Träger des Schuhes im Bereich der Fußwölbung auf eine Erhöhung tritt, die Vordersohle 7 nicht mehr nach unten abgebogen werden. Hierbei tritt keinerlei Belastung des Ristes des Trägers mehr auf, da die gesamte Belastung von den Zugelementen 11, 12 und der Sohle 1 selbst aufgenommen wird. Der Fersenbereich 2 kann umlaufend von den Zugelementen 11 bzw. 12 erfasst sein.

Die Zugelemente 11, 12 können aus Fasern, Fäden oder wenigstens einem Faserstrang bestehen. Als Materialien dienen Kunststofffasern, Textilfasern, Kohlefasern, Glasfasern oder Aramidfasern. Diese können mit einem Bindemittel, beispielsweise aus einem Thermoplast oder Duroplast, versetzt sein, das bei einem Heißformprozeß die Fasern, Fäden und/oder Faserstränge miteinander verbindet. Dieser Prozeß kann gleichzeitig der Prozeß zum Verbinden des oder der Zugelemente 11, 12 mit dem Rand der hochgezogenen Wände sein. Auch kann bei einem Endloszugband dieses beispielsweise mit dem umlaufenden Rand der Sohle 1 verbunden sein, gegebenenfalls mit Ausnahme derjenigen Bereiche, in denen die Zugelemente 11, 12 frei verlaufen. Einzelzugbänder oder das Endloszugband kann bzw. können aber auch nur zum Teil am Rand und zu einem anderen Teil auf dem Boden 7' der Vordersohle 7 und/oder dem Boden der Ferse oder Fersenschale 3 angebracht sein.

Bevorzugt ist die Vordersohle 7 von einer Seite 9 über die Spitze 13 bis zur anderen Seite 10 durchgehend mit einer nach oben weisenden Wand versehen, also annähernd schalenförmig ausgebildet. Hierdurch wird eine zusätzliche Versteifung erreicht, welche die gewünschte Wirkung noch unterstützt. Dabei kann der hochgezogene Rand bzw. die hochgezogene Wand im Ballenbereich 5 höher sein als nach vorn in Richtung zur Spitze 13 hin. Der Boden 7' der Vordersohle 7 kann mit wenigstens einer verstärkenden Sicke 7.2 versehen sein. Diese verläuft bzw. verlaufen vorzugsweise in Richtung der Längsachse der Sohle 1 und ist bzw. sind nach unten gerichtet.

Mit Vorteil ist der Stegbereich 4 durch seitliche, insbesondere bogenförmige Aussparungen 14 bzw. 15 relativ schmal ausgebildet. Die Breite des Stegbereiches 4 beträgt vorteilhaft etwa 1/5 bis 3/4 der maximalen Breite des Fersenbereichs 2 bzw. der Fersenschale 3. Durch die Aussparungen 14, 15 verlaufen die Zugelemente 11, 12 im Bereich 4 der Fußwölbung frei von einer Wand 3.9 bzw. 3.10 zur anderen Wand 7.9 bzw. 7.10. Dadurch wird der Fuß im Bereich der Fußwölbung nicht von der harten Sohle 1 umfaßt und trotzdem das Abbiegen der Vordersohle 7 nach unten durch die Zugelemente 11, 12 verhindert.

Die Fersenschale 3 kann im Bereich des Auftreffens des Fersenbeins eine Durchbrechung 3.1 aufweisen.

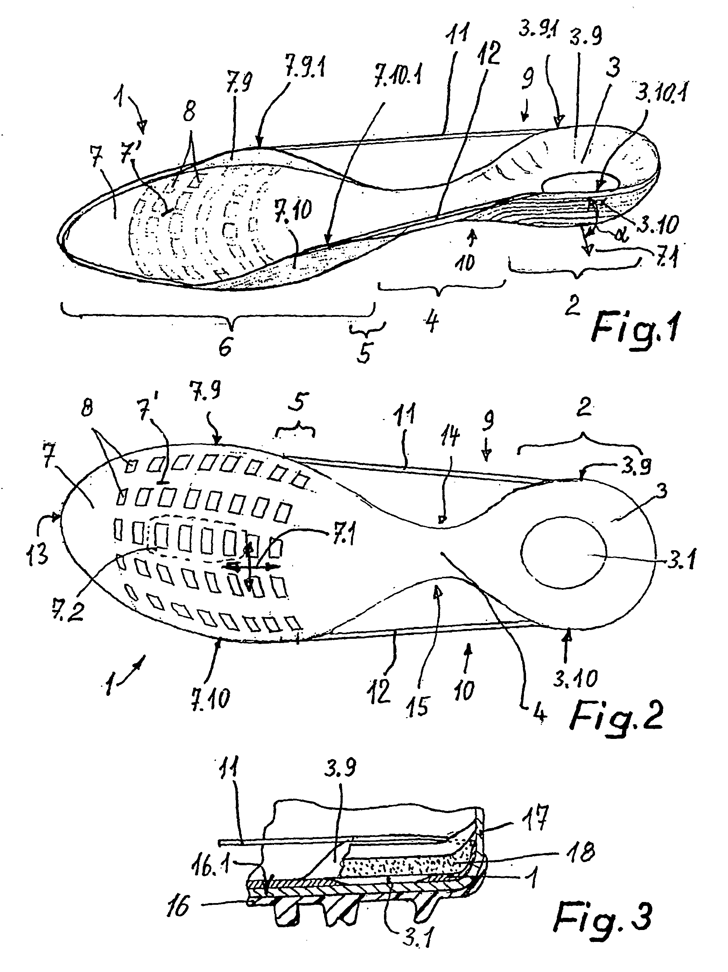

Die Fig. 3 zeigt einen Schnitt durch einen Fersenabschnitt eines Schuhes 1. Auf der Innenseite 16.1 einer weichelastischen, flexiblen Laufsohle 16 ist ein Schaftmaterial 17 befestigt, beispielsweise aufgestrobelt, aufgezwickt und/oder aufgeklebt. Auf dieses Schaftmaterial 17 ist die Sohle 1 aufgelegt und vorzugsweise mit diesem fest verbunden, beispielsweise aufgeklebt. Die Sohle 1 ist mit einer Auflage 18 versehen, insbesondere mit dieser fest verbunden. Die Auflage 18 kann auch eine Einlegesohle sein. Die Auflage 18 besteht vorzugsweise aus einem gummielastisch nachgiebigen Material, insbesondere einem Schaumstoff aus elastischem oder elastisch eingestelltem Kunststoff. Als Kunststoff kann ein schäumbarer Thermoplast oder Duroplast Verwendung finden. Geeignet ist ein Kunststoff aus oder auf der Basis von Polyamid, Polyethylen, Polyurethan oder dgl.. Bevorzugt ist die Auflage 18 der Fußform angepaßt. Eine mit einer Auflage 18 versehene Sohle 1 kann auch als Brandsohle ausgebildet und in einen Schuh eingesetzt und befestigt sein.

Die mit einer Deckschicht, beispielsweise der Auflage 18 oder einer Brandsohle oder Comfort-Sohle verbundene Sohle 1 kann lose in den gestrobelten Schuh eingelegt oder mit diesem fest verbunden sein. Die Sohle 1 übernimmt weitgehend die Funktionen der üblichen Sohlenbasis und der Brandsohle, wie beispielsweise die Flexibilität, Stabilität, Torsionssteifigkeit oder dgl., jedoch bei geringerem Gewicht als bei bisher bekannten Ausführungen.

Bei dem Ausführungsbeispiel gemäß den Fig. 1 bis 3 können die Zugelemente 11, 12 bzw. das Endloszugelement an der Innenseite oder an der Außenseite der Wände 3.9, 3.10 bzw. 7.9, 7.10 vorgesehen sein.

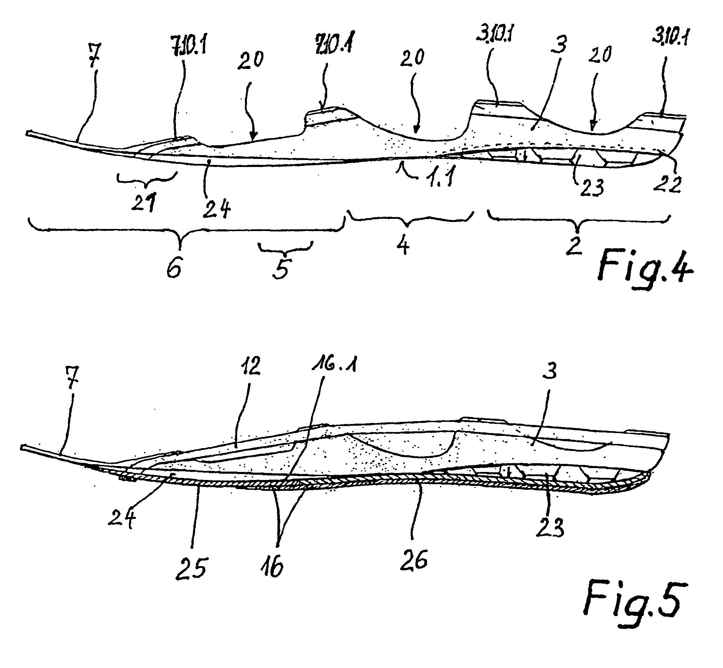

Bei dem Ausführungsbeispiel gemäß den Fig. 4 und 5 sind an den Wänden 3.9, 3.10 bzw. 7.9, 7.10 (siehe Fig. 1) außen Nuten 3.10.1 und 7.10.1 angebracht, in die die Zugelemente 11, 12 eingelegt und befestigt, insbesondere eingeklebt, sind. Die Nuten 3.10.1 bzw. 7.10.1 können auch auf der Innenseite angebracht sein, wenn die Zugelemente 11, 12 innen entlang verlaufen. Die Nutbreite entspricht etwa der Breite der Zugelemente 11, 12 und die Tiefe der Nuten 3.10.1 und 7.10.1 beträgt etwa 0,2 mm bis 0,5 mm. Bevorzugt kann zwischen den Wänden 3.9, 3.10 und/oder 7.9, 7.10 jeweils wenigstens ein niedrigerer Abschnitt 20 vorgesehen sein, wobei die Zugelemente 11, 12 dazwischen frei gespannt sind. Die Zugelemente 11, 12 müssen nicht, wie in den Fig. 1 bis 3 dargestellt, bei der Vordersohle 7 um deren Spitze herumgeführt sein. Es genügt und kann sogar vorteilhaft sein, wenn die Zugelemente 11, 12 vor oder im Bereich 21 der Zehengrundgelenke enden und dort beispielsweise quer unter der Sohle 1 hindurchgeführt sind, wie in Fig. 5 dargestellt ist. Im Bereich der Spitze der Vordersohle 7 muß dann keine erhöhte Wand vorgesehen werden, wie aus den Fig. 4 und 5 ersichtlich ist. Auch können die von der Vordersohle 7 kommenden Zugelemente 11 bzw. 12 nach dem Ballenbereich 6 oder im Bereich 4 der Fußwölbung quer unter der Sohle 1 hindurchgeführt sein.

Vorteilhaft ist insbesondere auf der Unterseite 1.1 der Sohle 1 oder in einer Vertiefung 22 der Sohle 1 oder in der Durchbrechung 3.1 der Fersenschale 3 ein Dämpfungselement 23 vorgesehen und mit dem Material der Sohle 1 fest verbunden, insbesondere an- oder eingeklebt oder bei der Herstellung der Sohle 1 mit eingeformt. Bevorzugt ist das Dämpfungselement 23 ein Wabenkörper. Mit Vorteil ist die Oberfläche der aus transparentem oder durchscheinendem Material bestehenden Sohle 1 oberhalb des Dämpfungselementes 23 glatt oder hochglänzend, so daß die Struktur des Dämpfungselementes 23 sichtbar ist.

Bei Sohlen 1, die für Schuhe mit nicht besonders hohen Belastungen der eingangs genannten Art vorgesehen sind, kann es ausreichen, wenn die Zugelemente 11, 12 lediglich im Vorderfußbereich 6 vorhanden sind und sich erst von dem Bereich 21 der Zehengrundgelenke aus nach hinten erstrecken. Diese können dann im Bereich 21 der Zehengrundgelenke und/oder im Bereich 4 der Fußwölbung, insbesondere in deren Anfangsbereich oder dem Endbereich des Ballenbereichs 6 quer über die Unterseite 1.1 der Sohle 1 verlaufen und dort an der Sohle 1 befestigt sein.

Gemäß einer vorteilhaften Weiterbildung der Erfindung kann an der Sohle 1, insbesondere an der Unterseite 1.1 und vorzugsweise in einer flachen Vertiefung 24 ein Verstärkungsteil 25 aufgebracht sein. Dieses besteht aus Kunststoff oder faserverstärktem Material, insbesondere mit Glasfasern, Kohlenstofffasern, Kunststofffasern, Textilfasern, gegebenenfalls mit einem Bindemittel aus einem Thermoplast oder Duroplast. Bevorzugt ist das Verstärkungsteil 25 ein gewölbtes Formteil ohne Unterbrechungen bzw. Durchbrechungen.

Die erfindungsgemäße Sohle 1 ist bevorzugt in Schuhen anwendbar, bei denen auf der Innenseite 16.1 der Laufsohle 16 das Schaftmaterial 17 aufgebracht und befestigt ist und auf dem Schaftmaterial 17 und dem gegebenenfalls frei bleibenden Teil der Innenseite 16.1 der Laufsohle die Sohle 1 als Zwischensohle fest aufgebracht ist und auf der Sohle 1 eine Einlegesohle oder Auflage 18 vorgesehen und insbesondere mit der Sohle 1 fest verbunden ist.

Die erfindungsgemäße Sohle 1 ist besonders geeignet für Fußballschuhe, für Schuhe für den American Football, Cricket, Baseball, für Golfschuhe oder dgl..

## Patentansprüche

1. Als Zwischensohle, Innensohle oder Einlegesohle ausgebildete Sohle (1) für einen Schuh mit einer durchbiegbaren Laufsohle, insbesondere Fußballschuh, **dadurch gekennzeichnet, dass** sie aus einem Material, einem Materialverbund und/oder einem Materialgemisch mit federelastischen, flexiblen Eigenschaften besteht und im Fersenbereich (2) über den Bereich der Fußwölbung, im sogenannten Stegbereich (4), bis zum Ballenbereich (5) des Fußballens zwar federelastisch, jedoch derart steif ausgebildet ist, dass sie in diesen Bereichen (2, 4) bei normaler Belastung nicht oder kaum, im Ballenbereich (5) und im zumindest leicht schalenförmig ausgebildeten Vordersohlenbereich (6) zumindest quer zu dessen Längsachse elastisch federnd biegbar ist, dass weiterhin sowohl der Vordersohlenbereich (6) zumindest im Ballenbereich (5) als auch der Fersenbereich (2) jeweils auf beiden Seiten (9, 10) etwa 0,5 cm bis 2 cm hochgezogen sind und dass zwischen diesen hochgezogenen Wänden (3.9, 3.10; 7.9, 7.10) in deren oberem Randbereich (3.9.1, 3.10.1; 7.9.1, 7.10.1) auf jeder Seite (9, 10) wenigstens ein diese verbindende(s), zwischen diesen frei verlaufende(s), nicht oder nur unwesentlich dehnbare(s) Zugelement(e) (11, 12) vorgesehen ist bzw. sind, welche(s) mit den Wänden (3.9, 3.10; 7.9, 7.10) fest verbunden ist bzw. sind.

2. Sohle nach Anspruch 1, **dadurch gekennzeichnet, dass** sowohl der Vordersohlenbereich (6) vor dem Ballenbereich (5) als auch im Bereich nach dem Ballenbereich (5) bis zum Bereich (4) der Fußwölbung und auch der Fersenbereich (2) jeweils auf beiden Seiten (9, 10) hochgezogen sind.

3. Sohle nach Anspruch 1 oder 2, **dadurch gekennzeichnet, dass** der Fersenbereich (2) umlaufend von dem bzw. den Zugelement(en) (11, 12) erfasst ist.

4. Sohle nach einem der Ansprüche 1 bis 3, **dadurch gekennzeichnet, daß** die erhöhten Wände (3.9, 3.10) des Fersenbereichs (2) und/oder des Vorderfußbereichs (6), insbesondere an den Seiten (9, 10) zumindest einen niedrigeren Abschnitt (20) aufweisen, in denen das bzw. die Zugelement(e) (11, 12) frei gespannt verläuft bzw. verlaufen.

5. Sohle nach einem der Ansprüche 1 bis 4, **dadurch gekennzeichnet, daß** die hochgezogenen Wände (7.9, 7.10) des Vordersohlenbereichs (6) vor dem Ballenbereich (5) höher sind als im übrigen Vordersohlenbereich (6).

6. Sohle nach einem der Ansprüche 1 bis 5, **dadurch gekennzeichnet, daß** die Wände (3.9, 3.10; 7.9, 7.10) des Vordersohlenbereichs (6) und der Ferse (3) nach oben hin nach außen gerichtet, insbesondere der Fußform angepaßt sind.

7. Sohle nach Anspruch 6, **dadurch gekennzeichnet, daß** der Außenwinkel (α) der Wände (3.9, 3.10; 7.9, 7.10) zur Sohlenebene (7.1) etwa 45° bis 80° beträgt.

8. Sohle nach einem der Ansprüche 1 bis 7, **dadurch gekennzeichnet, daß** die Höhe der Wände (3.9, 3.10; 7.9, 7.10) von der unteren Sohlenebene (7.1) aus etwa 0,5 cm bis 2 cm beträgt.

9. Sohle nach einem der Ansprüche 1 bis 8, **dadurch gekennzeichnet, daß** sie im Stegbereich (4) zwischen dem Fersenbereich (2) und Vordersohlenbereich (6) auf jeder Seite jeweils eine seitliche Aussparung (14, 15) aufweist.

10. Sohle nach Anspruch 9, **dadurch gekennzeichnet, daß** die Breite des Stegbereichs (4) etwa 1/5 bis 3/4 der maximalen Breite des Fersenbereiches (2) entspricht.

11. Sohle nach einem der Ansprüche 1 bis 10, **dadurch gekennzeichnet, daß** der Vordersohlenbereich (6) eine Vielzahl von Durchbrechungen (8) aufweist.

12. Sohle nach einem der Ansprüche 1 bis 11, **dadurch gekennzeichnet, daß** der Fersenbereich (2) im Bereich des auftreffenden Fersenbeins eine Durchbrechung (3.1) aufweist.

13. Sohle nach einem der Ansprüche 1 bis 12, **dadurch gekennzeichnet, daß** auf ihr eine federnd elastisch nachgiebige Auflage (18) befestigt, insbesondere mit ihr verpreßt oder verklebt ist.

14. Sohle nach einem der Ansprüche 1 bis 13, **dadurch gekennzeichnet, daß** im Fersenbereich (2), vorzugsweise auf der Unterseite (1.1) der Sohle (1), insbesondere in einer Vertiefung (22) oder in der Durchbrechung (3.1) ein Dämpfungselement (23) vorgesehen und mit dem Material der Sohle (1) dauerhaft verbunden ist.

15. Sohle nach Anspruch 14, **dadurch gekennzeichnet, daß** das Dämpfungselement (23) ein Wabenkörper ist.

16. Sohle nach einem der Ansprüche 1 bis 15, **dadurch gekennzeichnet, daß** das bzw. die Zugelement(e) (11, 12) in Form eines umlaufenden Endlosstranges sich, mit Ausnahme der vorzugsweise vorhandenen freien Bereiche im Stegbereich (4) und/oder im Fersenbereich (2), um den gesamten oberen Rand der Sohle (1) erstreckt bzw. erstrecken.

17. Sohle nach einem der Ansprüche 1 bis 16, **dadurch gekennzeichnet, daß** das bzw. die Zugelement(e) (11, 12) aus einem Faserstrang aus Glasfasern, Kohlefasern, Kunststofffasern oder Textilfasern, gegebenenfalls auch mit einem Bindemittel aus einem Thermoplast oder Duroplast versehen, besteht bzw. bestehen.

18. Sohle nach einem der Ansprüche 1 bis 17, **dadurch gekennzeichnet, daß** das bzw. die Zugelement(e) (11, 12) aus Fäden, Fasern oder Fasersträngen aus wenigstens einem der Materialien Glas, Kohle, Aramid, Thermoplast oder Duroplast und aus einem dieses bzw. diese verbindenden, bei Hitze schmelzenden Bindemittel aus einem Thermoplast oder Duroplast bestehen und durch einen Heißformprozeß hergestellt sind, wobei das bzw. die Zugelement(e) (11, 12) mit angeformt oder eingeformt ist bzw. sind.

19. Sohle nach einem der Ansprüche 1 bis 18, **dadurch gekennzeichnet, daß** das bzw. die Zugelement(e) (11, 12) sich vom Vordersohlenbereich (6) aus bis zum Beginn oder maximal etwa bis zur Mitte des Bereiches (4) der Fußwölbung erstreckt bzw. erstrecken.

20. Sohle nach einem der Ansprüche 1 bis 19, **dadurch gekennzeichnet, daß** das bzw. die Zugelement(e) (11, 12) sich im Vordersohlenbereich (6) erst von den Zehengrundgelenken aus nach hinten erstrecken.

21. Sohle nach Anspruch 19 oder 20, **dadurch gekennzeichnet, daß** das bzw. die Zugelement(e) (11, 12) einteilig im Vordersohlenbereich (6) und gegebenenfalls auch im Bereich (4) der Füßwölbung quer über die Sohle (1) verläuft bzw. verlaufen.

## Claims

1. Sole (1) embodied as a throughsole, inner sole or insole für a shoe with a flexible outsole, in particular football boot, **characterised in that** it is made of a material, a material sandwich and/or a material mixture with resiliently elastic flexible properties, and is embodied so that it is resiliently elastic in the heel area (2) over the area of the arch of the foot, the so called web area (4), to the ball area (5) of the ball of the foot but rigid such that in these areas (2, 4) under normal loading it can barely be bent in a resilient elastic manner if at all in the ball area (5) and in the at least slightly shell-shaped front sole area (6) at least transversely to its longitudinal axis, such that further both the front sole area (6) at least in the ball area (5) and the heel area (2) are in each case raised approximately 0.5 cm to 2 cm on both sides (9, 10), and that between these raised walls (3.9, 3.10; 7.9, 7.10) in their tipper edge area (3.9.1, 3.10.1; 7.9.1, 7.10.1) on each side (9, 10) there is at least one completely or largely unstretchable tension element (11, 12) connecting these and running freely between these which are firmly connected to the walls (3.9,3.10; 7.9, 7.10).

2. Sole according to claim 1, **characterised in that** the front sole area (6) in front of the ball area (5) as well as in the area behind the ball area (5) till the area (4) of the arc of the foot and also the heel area (2) are raised on both sides (9, 10).

3. Sole according to claim 1 or 2, **characterised in that** the heel area (2) is grasped peripherally by the tension element or elements (11, 12).

4. Sole according to one of claims 1 to 3, **characterised in that** the raised walls (3.9, 3.10) of the heel area (2) and/or of the front foot area (6), in particular at the sides (9, 10), exhibit at least one lower section (20) in which the tension element or elements (11, 12) run stretched freely.

5. Sole according to one of claims 1 to 4, **characterised in that** the raised walls (7.9, 7.10) of the front sole area (6) in front of the ball area (5) are higher than in the remaining front sole area (6).

6. Sole according to one of claims 1 to 5, **characterised in that** the walls (3.9, 3.10; 7.9, 7.10) of the front sole area (6) and the heel (3) are angled upwards and outwards, in particular matching the shape of the foot.

7. Sole according to claim 6, **characterised in that** the external angle (α) of the walls (3.9, 3.10; 7.9, 7.10) relative to the plane of the sole (7.1) is approximately 45° to 80°.

8. Sole according to one of claims 1 to 7, **characterised in that** the height of the walls (3.9, 3.10; 7.9, 7.10) from the lower sole plane (7.1) is approximately 0.5 cm to 2 cm.

9. Sole according to one of claims 1 to 8, **characterised in that** it exhibits a side recess (14, 15) on each side in the web area (4) between the heel area (2) and the front sole area (6).

10. Sole according to claim 9, **characterised in that** the width of the web area (4) corresponds to roughly 1/5 to 3/4 of the maximum width of the heel area (2).

11. Sole according to one of claims 1 to 10, **characterised in that** the front sole area (6) exhibits a plurality of openings (8).

12. Sole according to one of claims 1 to 11, **characterised in that** the heel area (2) exhibits an opening (3.1) in the area of the impact of the heel.

13. Sole according to one of claims 1 to 12, **characterised in that** a resiliently elastically yielding covering (18) is secured on it, in particular pressed or glued with it.

14. Sole according to one of claims 1 to 13, **characterised in that** a damping element (23) is provided in the heel area (2), preferably on the underside (1.1) of the sole (1), in particular in a recess (22) or in the opening (3.1), and durably connected to the material of the sole (1).

15. Sole according to claim 14, **characterised in that** the damping element (23) is a honeycomb structure.

16. Sole according to one of claims 1 to 15, **characterised in that** the tension element or elements (11, 12) in the form of a peripheral endless strand extend around the entire tipper edge of the sole (1), except in the preferably free areas in the web area (4) and/or in the heel area (2).

17. Sole according to one of claims 1 to 16, **characterised in that** the tension element or elements (11, 12) are made of a fibre strand made of glass fibres, carbon fibres, plastic fibres or textile fibres, possibly also provided with a bonding material made of a thermoplast or duroplast.

18. Sole according to one of claims 1 to 17, **characterised in that** the tension element or elements (11, 12) are made of threads, fibres or fibre strands made of at least one of the materials glass, carbon, aramide, thermoplast or duroplast and of a bonding material made of a thermoplast or duroplast which melts when exposed to heat and connects this or these, and are made by a heating and moulding process, whereby the tension element or elements (11, 12) are moulded thereto or therein.

19. Sole according to one of claims 1 to 18, **characterised in that** the tension element or elements (11, 12) extend from the front sole area (6) to the beginning or at most to roughly the middle of the area (4) of the arch of the foot.

20. Sole according to one of claims 1 to 19, **characterised in that** in the front sole area (6) the tension element or elements (11, 12) only extend from the basal joints of the toes towards the rear.

21. Sole according to claim 19 to 20, **characterised in that** the tension element or elements (11, 12) run transversely over the sole (1) in one piece in the front sole area (6) and possibly also in the area (4) of the arch of the foot.

## Revendications

1. Semelle (1) constituant une semelle intercalaire, une première ou une semelle intérieure, pour une chaussure comportant une semelle d'usure flexible, en particulier pour une chaussure de football,
**caractérisée en ce qu'**
elle est composée d'une matière, d'un composite de matières et/ou d'un mélange de matières possédant des propriétés élastiques à la façon de ressorts, flexibles, et, dans la région du talon (2), sur la zone de la voûte plantaire, dans ce qu'on appelle la région du cou de pied (4) jusqu'à la région (5) de la plante du pied, elle est certes élastique à la façon d'un ressort mais cependant suffisamment rigide pour que, dans ces régions (2, 4), et sous une charge normale, elle ne puisse absolument pas, ou puisse seulement à peine, fléchir élastiquement à la façon d'un ressort, du moins transversalement à son axe longitudinal, dans la région (5) de la plante du pied et dans la région avant (6) de la semelle, qui est de forme au moins légèrement en cuvette, en outre, aussi bien la région avant (6) de la semelle, du moins dans la région (5) de la plante du pied, que la région (2) du talon sont relevées d'environ 0,5 cm à 2 cm sur les deux côtés (9, 10) et entre ces parois relevées (3.9, 3.10 ; 7.9, 7.10), dans leur région marginale supérieure (3.9.1, 3. 10. 1 ; 7.9.1, 7.10.1) et de chaque côté (9, 10) au moins un élément de traction (11, 12) les relie, s'étend librement entre eux, et est inextensible ou seulement imperceptiblement extensible, cet élément ou ces éléments étant reliés solidement aux parois (3.9, 3.10 ; 7.9, 7.10).

2. Semelle selon la revendication 1,
**caractérisée en ce qu'**
aussi bien la région avant (6) de la semelle, en avant de la région (5) de la plante du pied que dans la région en arrière de la région (5) de la plante du pied jusqu'à la région (4) de la voûte plantaire et que la région (2) du talon, sont relevées sur les deux côtés (9, 10).

3. Semelle selon la revendication 1 ou 2,
**caractérisée en ce que**
la région (2) du talon est intéressée le long de la périphérie par l'élément de traction ou les éléments de traction (11, 12).

4. Semelle selon une des revendications 1 à 3,
**caractérisée en ce que**
les parois relevées (3.9, 3.10) de la région (2) du talon et/ou de la région (6) de l'avant-pied présentent, en particulier le long des côtés (9, 10), au moins un segment plus bas (20) dans lequel ou dans lesquels l'élément de traction ou les éléments de traction (11, 12) s'étend ou s'étendent en portée libre.

5. Semelle selon une des revendications 1 à 4,
**caractérisée en ce que**
les parois relevées (7.9, 7.10) de la région avant (6) de la semelle en avant de la région (5) de la plante du pied sont plus hautes que dans le reste de la région avant (6) de la semelle.

6. Semelle selon une des revendications 1 à 5,
**caractérisée en ce que**
les parois (3.9, 3.10 ; 7.9, 7.10) de la région avant (6) de la semelle et celles du talon (3) sont dirigées vers le haut et vers l'extérieur, en particulier adaptées à la forme du pied.

7. Semelle selon la revendication 6,
**caractérisée en ce que**
l'angle extérieur (α) des parois (3.9, 3.10 ; 7.9, 7.10) par rapport au plan (7.1) de la semelle est d'environ 45° à 80°.

8. Semelle selon une des revendications 1 à 7,
**caractérisée en ce que**
la hauteur des parois (3.9, 3.10 ; 7.9, 7.10) au-dessus du plan inférieur (7.1) de la semelle est d'environ 0,5 cm à 2 cm.

9. Semelle selon une des revendications 1 à 8,
**caractérisée en ce qu'**
elle présente un évidement latéral (14, 15) sur chaque côté dans la région (4) du cou de pied, entre la région (2) du talon et la région avant (6) de la semelle.

10. Semelle selon la revendication 9,
**caractérisée en ce que**
la largeur de la région (4) du cou de pied correspond à peu près à 1/5 à 3/4 de la largeur maximale de la région (2) du talon.

11. Semelle selon une des revendications 1 à 10,
**caractérisée en ce que**
la région avant (6) de la semelle présente une pluralité d'ajours (8).

12. Semelle selon une des revendications 1 à 11,
**caractérisée en ce que**
la région (2) du talon présente un ajour (3.1) dans la région du calcanéum qui porte sur elle.

13. Semelle selon une des revendications 1 à 12,
**caractérisée en ce que**
une pièce d'appui (18) souple, élastique à la façon d'un ressort, est fixée à la semelle, en particulier comprimée avec la semelle ou collée sur elle.

14. Semelle selon une des revendications 1 à 13,
**caractérisée en ce qu'**
un élément amortisseur (23) est prévu dans la région (2) du talon, de préférence sur la face inférieure (1.1) de la semelle (1), en particulier dans une cavité (22) ou dans l'ajour (3.1), et est relié durablement à la matière de la semelle (1).

15. Semelle selon la revendication 14,
**caractérisée en ce que**
l'élément amortisseur (23) est un corps à nid d'abeille.

16. Semelle selon une des revendications 1 à 15,
**caractérisée en ce que**
l'élément de traction ou les éléments de traction (11, 12) formé(s) d'un cordon sans fin périphérique s'étend ou s'étendent sur tout le bord supérieur de la semelle (1), à l'exception des régions libres présentes de préférence dans la région (4) du cou de pied et/ou dans la région (2) du talon.

17. Semelle selon une des revendications 1 à 16,
**caractérisée en ce que**
l'élément de traction ou les éléments de traction (11, 12) est composé ou sont composés d'un cordon fibreux fait de fibres de verre, de fibres de carbone, de fibres synthétiques ou de fibres textiles, éventuellement aussi munies d'un liant fait d'un thermoplaste ou d'un thermodurcissable.

18. Semelle selon une des revendications 1 à 17,
**caractérisée en ce que**
l'élément de traction ou les éléments de traction (11, 12) est ou sont fait(s) de fils, de fibres ou de cordons de fibres d'au moins une des matières suivantes : verre, carbone, aramide, thermoplaste ou thermodurcissable et d'un liant qui assemble cette matière ou ces matières, qui fond à la chaleur, et qui est composé d'un thermoplaste ou d'un thermodurcissable, et est ou sont fabriqué(s) par un procédé de moulage à chaud, l'élément de traction ou les éléments de traction (11, 12) étant appliqués ou incorporés par le moulage.

19. Semelle selon une des revendications 1 à 18,
**caractérisée en ce que**
l'élément de traction ou les éléments de traction (11, 12) s'étend ou s'étendent dans la région avant (6) de la semelle jusqu'au commencement ou au maximum à peu près jusqu'au milieu de la région (4) de la voûte plantaire.

20. Semelle selon une des revendications 1 à 19,
**caractérisée en ce que**
dans la région avant (6) de la semelle, l'élément de traction ou les éléments de traction (11, 12) s'étend ou s'étendent vers l'arrière seulement à partir des articulations de base des orteils.

21. Semelle selon une des revendications 19 ou 20,
**caractérisée en ce que**
l'élément de traction ou les éléments de traction (11, 12) s'étend ou s'étendent transversalement au-dessus de la semelle (1) en une seule pièce dans la région avant (6) de la semelle, et éventuellement aussi dans la région (4) de la voûte plantaire.
